(19) Europäisches Patentamt / European Patent Office / Office européen des brevets

(11) **EP 1 051 800 B1**

(12) **EUROPÄISCHE PATENTSCHRIFT**

(45) Veröffentlichungstag und Bekanntmachung des Hinweises auf die Patenterteilung:
**05.09.2012   Patentblatt 2012/36**

(21) Anmeldenummer: **99960816.9**

(22) Anmeldetag: **27.10.1999**

(51) Int Cl.:
*H02P 9/48* (2006.01)        *H02J 7/14* (2006.01)

(86) Internationale Anmeldenummer:
**PCT/DE1999/003416**

(87) Internationale Veröffentlichungsnummer:
**WO 2000/027023 (11.05.2000 Gazette 2000/19)**

(54) **VERFAHREN ZUR LEISTUNGS- UND WIRKUNGSGRADOPTIMIERTEN REGELUNG VON SYNCHRONMASCHINEN**

METHOD FOR THE OPTIMIZED CONTROL IN TERMS OF OUTPUT AND EFFICIENCY OF SYNCHRONOUS MACHINES

PROCEDE DE REGLAGE OPTIMAL EN TERMES DE PUISSANCE ET DE RENDEMENT DE MACHINE SYNCHRONES

(84) Benannte Vertragsstaaten:
**DE ES FR GB IT SE**

(30) Priorität: **29.10.1998   DE 19849889**

(43) Veröffentlichungstag der Anmeldung:
**15.11.2000   Patentblatt 2000/46**

(73) Patentinhaber: **ROBERT BOSCH GMBH**
**70442 Stuttgart (DE)**

(72) Erfinder:
• **MUELLER, Wolfgang**
  **D-70439 Stuttgart (DE)**
• **LUZ, Oliver**
  **D-73669 Lichtenwald (DE)**
• **SCHOETTLE, Richard**
  **D-75248 Oelbronn (DE)**

(56) Entgegenhaltungen:
**EP-A- 0 693 816     EP-A- 0 717 490**
**US-A- 5 144 178**

**Beschreibung**

Stand der Technik

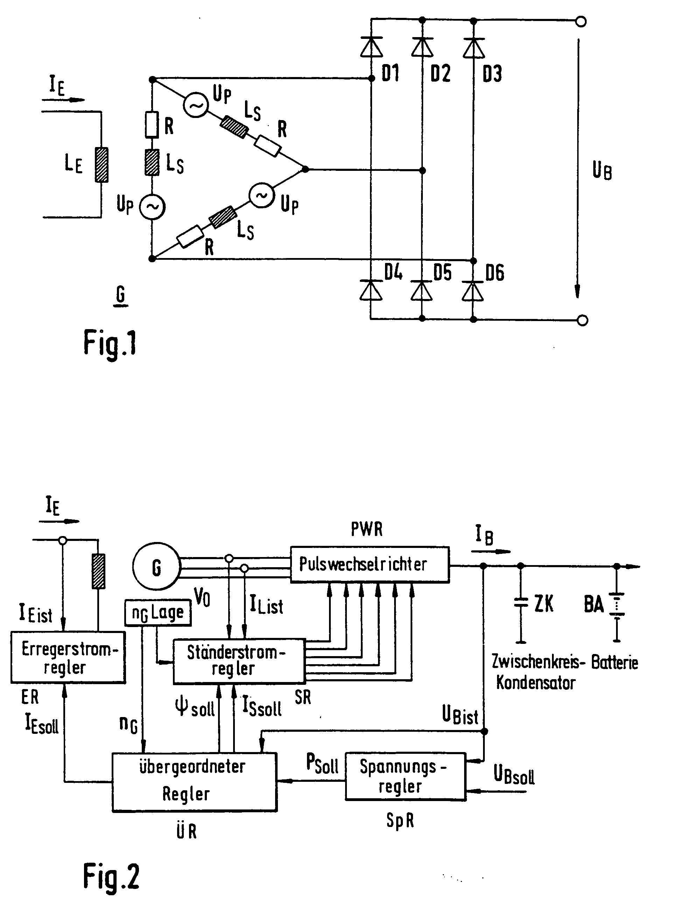

Im Kraftfahrzeug werden zur Energieerzeugung heute vorwiegend Klauenpolgeneratoren eingesetzt. Klauenpolgeneratoren sind Drehstrommaschinen, die angenähert durch das Prinzip der Synchronschenkelpolmaschine beschrieben werden können. Üblicherweise wird der 3-phasige Ausgangsstrom des Generators durch eine passive B6-Diodenbrücke gleichgerichtet, Figur 1 zeigt eine solche Anordnung. Der Generator wird durch den Erregerstrom so geregelt, daß sich die Ausgangsspannung $U_B$ des Generators unabhängig von der Drehzahl und, im Rahmen der Leistungsfähigkeit des Generators, auch unabhängig von der Last auf den gewünschten Wert einstellt. Mit einem Generator sowie der zugehörigen Gleichrichterschaltung, wie sie in Figur 1 dargestellt ist, beginnt die Leistungsabgabe erst nach Erreichen einer bestimmten Drehzahl, der sogenannten Angehdrehzahl. Bei Drehzahlen, die kleiner als die Angehdrehzahl sind, ist die Generatorspannung kleiner als die Batteriespannung. In diesem Fall kann keine Leistung über die B6- Gleichrichterbrücke ins Bordnetz gespeist werden.

Eine Möglichkeit die Leistung eines Klauenpolgenerators zu steigern, besteht darin, den Erregerstrom zu erhöhen. Dies führt jedoch bei den üblichen Maschinenauslegungen für die im Kfz verwendeten Klauenpolgeneratoren zu ausgeprägten magnetischen Sättigungserscheinungen. Diese Sättigungserscheinungen können die Leistungserhöhung wesentlich reduzieren. Außerdem führt eine deutliche Erhöhung des Erregerstroms während des Dauerbetriebs zu einer thermischen Überlastung des Generators, so daß dieses Verfahren nur zeitlich begrenzt angewendet werden kann.

Ein weiterer Ansatzpunkt zur Leistungserhöhung besteht in der Variation der Ständerwindungszahl. Eine Erhöhung der Ständerwindungszahl führt zu einer Reduktion der Angehdrehzahl und zu einer Erhöhung der Ausgangsleistung im niedrigen Drehzahlbereich. Allerdings wird in diesem Fall die Ausgangsleistung im mittleren und hohen Drehzahlbereich deutlich vermindert. Eine Reduktion der Ständerwicklungszahl führt zwar zu einer Leistungserhöhung im hohen Drehzahlbereich, gleichzeitig wird jedoch die Leistung im unteren Drehzahlbereich vermindert und die Angehdrehzahl erhöht. Eine Variation der Ständerwicklungszahl führt aus diesen Gründen daher nicht zum Ziel einer Leistungserhöhung über einen weiten Drehzahlbereich.

In der Patentanmeldung DE-P 197 33 221.8 wird dargestellt, wie mit Hilfe eines dem Generator nachgeschalteten Hochsetz- bzw. Tiefsetzstellers und Variation der Ständerwicklungszahlen die Leistungscharakteristik des Generators in vorteilhafter Weise verändert werden kann. Wird, wie in der Patentanmeldung DE-P 198 45569.0 beschrieben, die Ständerwicklungszahl reduziert und dem Generator mit Diodengleichrichter ein Hochsetzsteller nachgeschaltet, so ergibt sich eine Erhöhung der Leistung im mittleren und hohen Drehzahlbereich. Im unteren Drehzahlbereich wird die Spannung des Generators mit Hilfe des Hochsetzstellers auf das Spannungsniveau des Bordnetzes angehoben.

Ein wesentlicher Nachteil der Gleichrichtung der 3-phasigen Generatorströme mit Hilfe einer passiven B6-Brücke besteht darin, daß Betrag und Phase des Strangstroms oder der Polradwinkel als Stellgröße für die Generatorregelung nicht benützt werden. Die Strangspannung ist in diesem Fall durch die Bordnetzspannung fest vorgegeben und der Phasenwinkel zwischen Strangstrom und Strangspannung beträgt in allen Betriebspunkten mit guter Näherung φ= 0. Die Maschine kann daher nicht in allen Betriebspunkten bezüglich Ausgangsleistung, Wirkungsgrad und Regeldynamik optimal geführt werden.

Wird der Generator zusammen mit einem Pulswechselrichter betrieben, besteht diese Einschränkung nicht mehr. Es sind auch Druckschriften bekannt, die sich mit dem Einsatz eines Klauenpolgenerators in Verbindung mit einem Pulswechselrichter befassen.

In der DE-P 197 33 212.9 wird dabei ein Verfahren zur Regelung eines von einer Brennkraftmaschine antreibbaren Generators beschrieben. Dabei wird die Möglichkeit angegeben, mit zwei Regelbereichen zu arbeiten, dem Grunddrehzahlbereich bei niedrigen Drehzahlen und dem Feldschwächungsbereich bei höheren Drehzahlen. Ein Regelverfahren wird nicht dargestellt. Die Regelung des Erregerstroms wird nicht erwähnt. Die fehlende Einbeziehung des Erregerstroms führt jedoch zu einer nicht wirkungsgrad- und leistungsoptimalen Maschinen- bzw. Generatorführung.

Die US-PS 5,648,705 bzw. die EP 0 762 596 A1 beschreibt ein Verfahren, bei dem auf die Leistungssteigerung im unteren Drehzahlbereich durch Veränderung des Winkels zwischen Statorstrom und Polradspannung eingegangen wird. Ein ausgearbeitetes Regelkonzept wird nicht dargestellt. Wird im unteren Drehzahlbereich nicht maximale Ausgangsleistung benötigt, so wird der 3-phasige Strom des Generators mit Hilfe einer passiven Diodenbrücke und alleiniger Regelung des Erregerstroms auf die gewünschte Ausgangsspannung eingestellt. Für die passive Diodenbrücke werden die parasitären Dioden der MOSFET-Schalter der Stromrichterschaltung benützt. Es wird jedoch auf die Regelung im mittleren und höheren Drehzahlbereich nicht eingegangen. Eine leistungs- und wirkungsgradoptimale Maschinenführung im mittleren und höheren Drehzahlbereich bei Voll- und Teillast wird daher nicht erreicht.

In der US-PS 5 663 631 wird eine Generatorregelung beschrieben, bei der der Erregerstrom $I_E$ der Maschine durch einen Regler ausschließlich mit Hilfe der Differenz $\Delta U_B = U_{Bsoll} - U_{Bist}$ zwischen Sollwert $U_{Bsoll}$ und Istwert $U_{Bist}$ der Ausgangsgleichspannung ermittelt wird. Der Polradwinkel δ der Maschine wird für maximale Ausgangsleistung auf δ=90° gestellt. Gleichzeitig wird auf die Möglichkeit hingewiesen, die Maschine durch geeignete Wahl des Polradwinkels in einem wirkungsgradoptimalen Betriebspunkt zu betreiben. Es wird erwähnt, daß die genaue Einstellung des Polradwinkels in Abhängigkeit des Erregerstroms erfolgen kann. In welcher Weise der Polradwinkel in Abhängigkeit vom Erregerstrom genau variiert werden muß, wird nicht dargestellt. Wesentliches Kennzeichen dieses Verfahrens ist, daß die Bestimmung des Erregerstroms nur von der Regeldifferenz $\Delta U_B$ abhängig ist. Eine in der Patentschrift angedeutete Korrektur des Polradwinkels erfolgt nur in Abhängigkeit vom Erregerstrom.

Aus der EP 0 717 490 A1 sind Regelverfahren für Generatoren bekannt, bei denen zum Einen der Erregerstrom geregelt wird und zum Anderen der Generatorstrom mit Hilfe einer Blockwechselrichterbrücke in vorgegebener Weise beeinflusst wird. Ein Teil des Regelverfahrens bezieht sich auch darauf, das vom Generator ausgeübte Drehmoment in einer gewünschten Weise zu beeinflussen. Die bekannte Regelanordnung umfasst neben einem herkömmlichen Regler für den Erregerstrom auch einen Mikroprozessor, der einerseits mit dem herkömmlichen Regler in Verbindung steht und andererseits mit der Blockwechselrichterbrücke der Generatoranordnung verbunden ist und dieser Ansteuersignale zuführt.

Im Gegensatz zu dem bekannten Verfahren werden in den Ansprüchen Verfahren aufgezeigt, die für jeden Drehzahlpunkt und jede gewünschte Generatorleistung, den Erregerstrom und den Strangstrom nach Betrag und Phase frei auswählen können. Dadurch ergibt sich die Möglichkeit, aus allen möglichen Betriebszuständen der Maschine bzw. des Generators den für die aktuellen Bedürfnisse geeignetsten auszuwählen und entsprechend den Anforderungen den jeweils günstigsten Betriebspunkt einzustellen. Bei der vorliegenden Patentanmeldung beeinflußt die gewünschte Ausgangsleistung nicht nur den Sollwert des Erregerstroms, sondern direkt alle für die Maschinenführung relevanten Steuerungsparameter der Maschine.

Das aus der US-PS 5 663 631 bekannte Verfahren hat gegenüber der vorliegenden Patentanmeldung den zusätzlichen Nachteil, daß die Regeldynamik durch den Erregerkreis bestimmt wird. Daher besitzt es bezüglich des Verhaltens bei großen Laständerungen denselben Nachteil, wie die Gleichrichtung mit passiver B6- Diodenbrücke. Laständerungen werden also dynamisch nur entsprechend der großen Erregerzeitkonstanten ausgeregelt. In der vorliegenden Patentanmeldung wird jedoch zusätzlich Betrag und Phasenlage der Strangströme zur dynamisch hochwertigen Ausregelung großer Lastsprünge benützt.

Vorteile der Erfindung

Die erfindungsgemäßen Verfahren und Vorrichtungen zur Regelung eines Generators besitzen den Vorteil, daß sowohl die verfügbare Ausgangsleistung als auch der Wirkungsgrad des Generators in einem weiten Drehzahlbereich gegenüber einem Generator mit passiver Diodengleichrichtung wesentlich erhöht werden.

Zusätzlich wird durch das beschriebene Verfahren eine deutliche Verbesserung der Regeldynamik, beispielsweise bei einem Lastabwurf, erzielt. Bei heutigen Generatoren erfolgt der Schutz gegen Überspannungen beim Lastabwurf (load dump) mit Hilfe der als Z- Dioden ausgeführten Gleichrichterdioden. Soll der Generator eine höhere Bordnetzspannung , z.B. $U_B = 42V$, erzeugen, so ergeben sich erhebliche Probleme bei der Herstellung von Z- Dioden mit höherer Spannung. Um auch bei höheren Generatorspannungen, z.B. von $U_B=42V$, einen Schutz vor Überspannungen beim Lastabwurf zu erreichen, müssen daher andere Verfahren zur Spannungsbegrenzung gewählt werden. Das hier vorgestellte Verfahren verbindet in vorteilhafter Weise die Leistungs- und Wirkungsgraderhöhung des Generators mit einem wirksamen Schutz gegen Überspannungen bei Lastabwurf.

Erzielt werden die Vorteile durch ein Verfahren, das aus insgesamt vier unterschiedlichen Regelbereichen zur Regelung des Generators besteht. Einer der vier Regelbereiche wird je nach den gegebenen Anforderungen und Randbedingungen, beispielsweise der gewünschte Ausgangsleistung und der gegebenen Generatordrehzahl, ausgewählt. Auf diese Weise ist gegenüber dem Betrieb mit passiver Gleichrichtung eine wesentlich günstigere Maschinenführung möglich, die zu einer Erhöhung der verfügbaren Ausgangsleistung, des Wirkungsgrads und der Regeldynamik führt.

Die beanspruchten Verfahren sind vorteilhafterweise anwendbar sowohl bei Synchronvollpol- und Synchronschenkelpolmaschinen als auch bei Generatoren, die auf ähnlichen Funktionsprinzipien beruhen, beispielsweise Klauenpolgeneratoren. Dabei können die Strangwicklungen der Maschine sowohl in Stern- als auch in Dreieckschaltung verschaltet sein. Ein Verfahren wird am Beispiel einer idealisierten Synchronschenkelpolmaschine dargestellt. Bei Maschinen, die ähnliche Funktionsprinzpien oder nicht vernachlässigbare zusätzliche Effekte, wie z.B. ein ausgeprägtes magnetisch nichtlineares Verhalten besitzen, kann das beschriebene Verfahren mit Hilfe ähnlicher Überlegungen angewendete werden.

Die genannten Vorteile werden durch ein Verfahren gemäss Anspruch 1 wzielt.

Weitere Vorteile der Erfindung werden durch die in den Unteransprüchen angegebenen Maßnahmen erzielt.

Zeichnung

Ein Ausführungsbeispiel der Erfindung ist in der Zeichnung dargestellt und wird in der nachfolgenden Beschreibung näher erläutert.

Beschreibung

In Figur 1 sind die für das Verständnis der Erfindung wesentlichen Bestandteile eines Generators G mit passiver Gleichrichtung dargestellt. Figur 1 zeigt das heute in Kfz übliche Verfahren, um mit Hilfe eines Klauenpolgeneratros und einer Diodenbrücke Gleichstrom zu erzeugen. Dabei bezeichnet $L_E$ die Induktivität der Erregerwicklung und $I_E$ den Erregerstrom. Mit $L_s$ sind die Stator- bzw-Stranginduktivitäten bezeichnet. Up symbolisiert die Polradspannung und R den Widerstand der Wicklungen. Die Dioden der Diodenbrücke sind mi D1 bis D6 bezeichnet und $U_B$ ist die Bordnetzspannung bzw. Batteriespannung.

Die prinzipielle Anordnung des Gesamtsystems ist in Figur 2 dargestellt. Der Generator führt über Pulswechselrichterelemente PWR auf einen Zwischenkreiskondensator ZK und die Batterie BA. Eine Vorrichtung VO ermittelt die Generatordrehzahl $n_G$ und die Rotorlage. Die einzelnen Regler sind mit ER (Erregerstromregler), SR (Ständerstromregler), ÜR (Übergeordneter Regler) und SpR (Spannungsregler) bezeichnet. Die in Figur 2 sonst noch enthaltenen Größen werden in der folgenden Beschreibung erläutert.

Die gewünschte Soll-Leistung des Generators $P_{soll}$ wird durch einen Spannungsregler, beispielsweise einen PI-Regler, mit Hilfe der Regelabweichung zwischen Sollwert und Istwert der Batteriespannung $U_{Bsoll}$-$U_{Bist}$ ermittelt. Eine Vorrichtung zur Lage- und Drehzahlerkennung ermittelt die Rotorlage und die Generatordrehzahl. Die Verfahren zur Lage- und Drehzahlerkennung können beispielsweise auf optischen, magnetischen oder mechanischen Prinzipien beruhen. Desweiteren existieren auch sensorlose Verfahren die aus den Klemmenwerten der Maschine die Lage des Läufers und dessen Drehzahl ermitteln. Diese Verfahren sind bekannt und sollen deshalb hier nicht weiter beschrieben werden.

Eingangsgrößen für den übergeordneten Regler sind die gewünschte Generatorleistung $P_{Soll}$, die Drehzahl $n_G$ und die Zwischenkreisspannung $U_{Bist}$ . Durch den übergeordneten Regler wird wahlweise einer von vier Regelbereichen ausgewählt. Ausgegebene Sollwerte des übergeordneten Reglers sind, wie in Bild 2 definiert, der Betrag $Is_{Soll}$ und die Phasenlage $\Psi_{Soll}$ des Strangstroms bzw. die Längs- und Querkomponenten des Strangstroms $I_{dSoll}$, $I_{qSoll}$, sowie der Sollwert des Erregerstroms $I_{ESoll}$. Dadurch kann für jeden Drehzahlpunkt und jede, von dem Spannungsregler angeforderte Generatorleistung, der jeweils günstigste Betriebspunkt frei ausgewählt werden.

Eingangsgrößen des Ständerstromreglers sind die Rotorlage und die Generatordrehzahl $n_G$, die Sollwerte der Strangströme und die gemessenen Leiterströme $I_{List1}$ und $I_{List2}$. Aus den gemessenen zwei Leiterströmen können die Strangsströme des Generators durch Rechnung ermittelt werden. Alternativ können auch alle drei Leiterströme oder zwei bzw. drei Strangströme direkt gemessen werden.

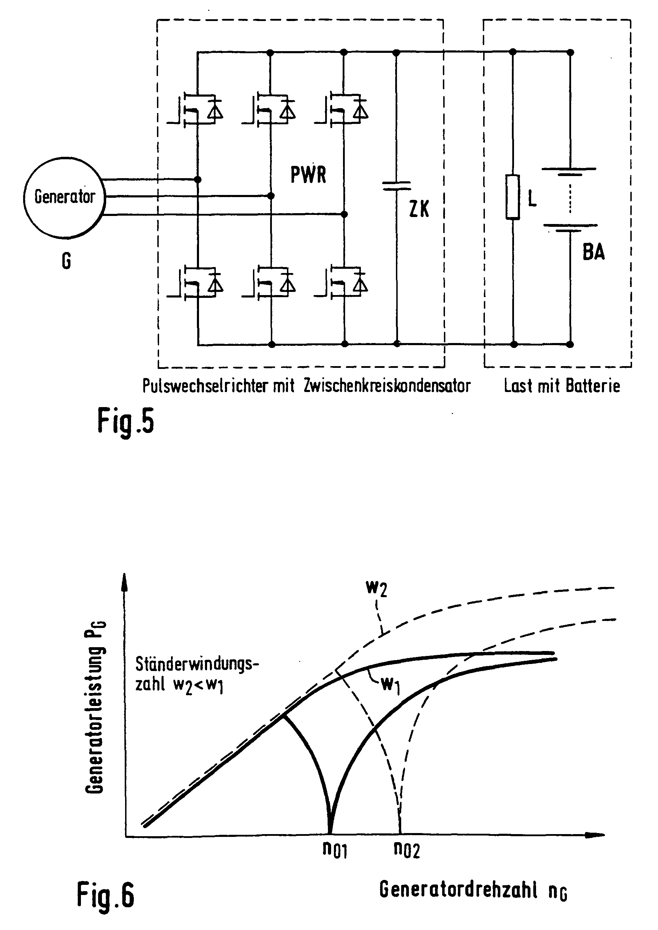

Der Ständerstromregler steuert die 6 Schalter des Pulswechselrichters (Figur 5) in geeigneter Weise an, um den Strangstrom nach Betrag und Phase einzuprägen. Die Schalter des Pulswechselrichters können beispielsweise, wie in Figur 5 dargestellt, als MOSFET-Transistoren ausgeführt werden. Die vielen möglichen Verfahren, mit Hilfe eines Pulswechselrichter in eine Drehstrommaschine Strangströme nach Betrag und Phase einzuprägen, sind allgemein bekannt und sollen hier deshalb nicht weiter beschrieben werden.

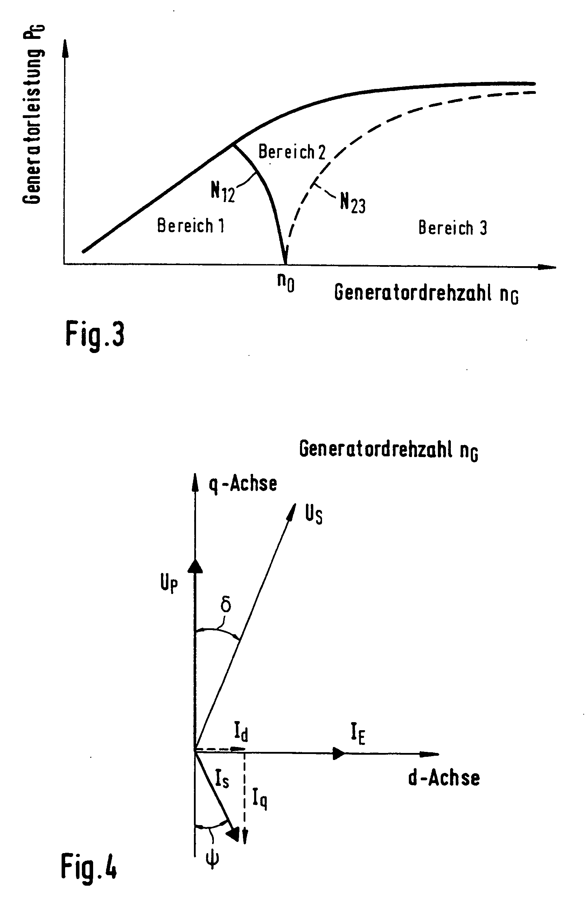

Der prinzipielle Verlauf der Regelbereiche 1- 3 ist in Figur 3 in Abhängigkeit von der Ausgangsleistung $P_{GEN}$ und der Generatordrehzahl $n_G$ dargestellt.

Beim Betrieb mit Drehzahlen, die links der Drehzahllinie $N_{23}$ sind, kann beim Betrieb mit passiver B6- Brücke keine Leistung entnommen werden, da die Ausgangsspannung des Generators in diesem Fall kleiner als die Bordnetzspannung $U_B$ ist. Die Drehzahllinie $N_{23}$ entspricht dem Vollastbetrieb des Generators mit einer passiven B6- Brücke. Mit Hilfe der Regelbereiche 1 und 2 kann der Generator auch in sehr niedrigen Drehzahlbereichen Leistung erzeugen. Die bei der passiven Gleichrichtung wichtige Angehdrehzahl $n_0$ ist damit mit Hilfe des erfindungsgemäßen Verfahrens nicht mehr von Bedeutung.

In Figur 6 ist dargestellt, wie sich die Leistungscharakteristik des Generators mit Variation der Ständerwicklungszahl verändert. Wird die Ständerwicklungszahl von w1 auf w2 verringert, so erhöht sich die Leistung bei großen Drehzahlen. Die Grenzlinien $N_{12}$ und $N_{23}$ werden nach höheren Drehzahlen hin verschoben. Die im sehr niedrigen Drehzahlbereich erzielbare maximale Ausgangsleistung bleibt jedoch konstant. Sie verläuft im Bereich 1 unabhängig von der Ständerwindungszahl auf der selben Gerade.

Die Regelbereiche 1-3 repräsentieren auch Bereiche mit unterschiedlichem Wirkungsgrad. Durch Veränderung der Ständerwicklungszahl kann daher sowohl das Leistungs- als auch das Wirkungsgradverhalten der Lastkennlinie anpaßt werden. Beispielsweise kann auf diese Weise erreicht werden, daß die Leerlaufdrehzahl des Kfz durch den wirkungsgradoptimalen Regelbereich 1 abgedeckt wird.

Regelbereich 1:

Durch den Regelbereich 1 wird der untere Drehzahlbereich des Generators abgedeckt. In diesem Regelbereich wird der Erregerstrom $I_E$ auf seinen maximal möglichen Wert gesetzt, d.h. $I_E = I_{Emax}$ Dadurch wird im unteren Drehzahlbereich die Polradspannung maximiert. Auf Grund der geringen Drehzahl ist die Strangspannung $U_S$ im Vergleich zur Bordnetzspannung $U_B$ stets so klein, daß der Spannungsstellbereich des Pulswechselrichters $U_{max}$ im Regelbereich 1 nicht überschritten wird. Die Strangsspannung $U_S$ ist daher stets kleiner, als der durch den Pulswechselrichter einstellbare Maximalwert $U_{max}$. Die Phasenlage und der Betrag der Strangströme kann daher ohne Einschränkung auf maximale Ausgangsleistung der Maschine eingestellt werden. Der maximal mögliche Strangstrom wird nur durch die Erwärmung der Maschine beschränkt. Bei konstantem Strangsstrom $I_S$ nimmt im Regelbereich 1 die maximale Ausgangsleistung der Maschine proportional mit der Drehzahl zu.

Mit dem in Bild 4 definiertem Winkel $\psi$ ergibt sich mit den Längs- und Querströmen $I_d$ und Iq

$$I_d = I_S \cdot \sin \psi \quad I_q = - I_S \cdot \cos \psi$$

für die Ausgangsleistung einer Synchronschenkelpolmaschine:

$$P_{GEN} = -\frac{3}{2} \cdot \omega \cdot \left\{ (M_{de} \cdot I_{E\max} \cdot I_S \cdot \cos(\psi) + \frac{1}{2} \cdot (L_d - L_q) \cdot I_S^2 \cdot \sin(2\psi)) \right\}$$

$\omega$: elektrische Kreisfrequenz der Ständerströme
$M_{de}$: Koppelinduktivität zwischen Rotor und Stator

Aus der obigen Gleichung $I_S=I_S(P_{GEN}, \psi)$ kann für eine gewünschte Solleistung des Generators $P_{GEN}$ ein optimaler Winkel $\psi_{opt}$ ermittelt werden, bei dem der Strangstrom ein Minimum annimmt.

Mit

$$A = \frac{L_d - L_q}{2} \quad , \quad B = M_{de} \cdot I_{E\max} \quad , \quad C = \frac{2 \cdot P_{Soll}}{3 \cdot \omega}$$

wird näherungsweise

$$\psi_{opt} = \arctan \left( \frac{1}{4} \cdot \left( \frac{B^2}{2 \cdot A \cdot C} + \sqrt{\left( \frac{B^2}{2 \cdot A \cdot C} \right)^2 + 8} \right) \right)$$

und

$$I_{S\min} = \frac{B \cdot \sin \psi}{2 \cdot A \cdot \cos(2\psi)}$$

Die Minimierung des Strangstroms durch die Einstellung eines optimalen Winkels $\psi_{opt}$ für eine gewünschte Solleistung $P_{GEN}$ führt bei maximal möglichem Erregerstrom $I_E=I_{Emax}$ damit zu minimierten ohmschen Strangverlusten. Da die elektrischen ohmschen Verluste in den Strangwicklungen, abgesehen von sehr kleinen Leistungen, stets wesentlich größer als die elektrischen Verluste im Erregerkreis sind, arbeitet die Maschine im Regelbereich 1 mit maximalem Wirkungsgrad.

Ab einer bestimmten, leistungsabhängigen Drehzahl, in Figur 3 durch die Drehzahllinie $N_{12}$ gekennzeichnet, kann die Phasenlage der Strangsströme durch den Pulswechselrichter nicht mehr entsprechend der Strategie des Regelbereiches 1 eingestellt werden. In diesem Fall überschreitet die Strangspannung den durch die Zwischenkreisspannung $U_{Bist}$ gegebenen Maximalwert des Spannungsstellbereichs $U_{max}$ des Pulswechselrichters. Dies führt zu einem zweiten Regelbereich, Regelbereich 2, in dem durch eine geeignete Maschinenführung die Strangspannung auf ihren möglichen Maximalwert begrenzt werden muß.

Regelbereich 2:

Im Regelbereich 2 wird weiterhin $I_E =I_{Emax}$ gesetzt. Nun wird jedoch die Phasenlage des Strangstroms so gewählt, daß die Strangspannung den maximalen, vom Pulswechselrichter einstellbaren Wert $U_S=U_{max}$ einnimmt. Die Phasenlage des Strangstroms wird so gewählt, daß durch eine Schwächung des Luftspaltfeldes der Spannungsstellbereich $U_{max}$ des Pulswechselrichters nicht überschritten wird.

Mit dem Polradwinkel $\delta$ und konstanter Strangspannung $U_S=U_{max}$ ergibt sich die Ausgangsleistung des Generators zu:

$$P_{Soll} = -\frac{3}{2} \cdot U_{max} \cdot \left( \frac{M_{de} \cdot I_{E\max}}{L_d} \cdot \sin(\delta) \quad + \quad \frac{U_{max}}{2 \cdot \omega} \cdot \left( \frac{1}{L_q} - \frac{1}{L_d} \right) \cdot \sin(2\delta) \right)$$

Bei gegebener maximaler, konstanter Strangspannung $U_{max}$ kann über Variation des Polradwinkels $\delta$ die gewünschte Generatorleistung eingestellt werden. Zu jeder gewünschten Solleistung kann, im Rahmen der Leistungsfähigkeit des Generators, ein bestimmter Polradwinkel $\delta = \delta(P_{soll})$ eingestellt werden.

Wird der Polradwinkel $\delta = \delta(P_{soll})$ in der Maschine eingestellt, so wird der Stellbereich des Pulswechselrichters nicht überschritten und die Bedingung $U_S = U_{max}$ eingehalten.

Der einzustellende Längs- und Querstrom ergibt sich zu

$$I_d = \frac{U_{max} \cdot \cos\delta - \omega \cdot M_{de} \cdot I_{E\max}}{\omega \cdot L_d}$$

und

$$I_q = -\frac{U_{max} \cdot \sin\delta}{\omega \cdot L_q}$$

Mit $I_E$, $I_d$ und Iq ist der Maschinenzustand in Abhängigkeit von der gewünschten Solleistung $P_{GEN}$ eindeutig definiert. Im Bereich 2 nimmt die Maschine Blindleistung $P_B$ auf. Mit abnehmender Ausgangsleistung (Teillastbetrieb) wird schließlich $\cos\varphi=1$ erreicht, das heißt Strangstrom und Strangsspannung sind in Phase. Die Drehzahllinie $N_{23}$ beschreibt diese Grenze. Bei noch kleineren Leistungen ist es dann jedoch sinnvoll, die Maschine mit $\cos\varphi=1$ weiter zu betreiben, um den Wirkungsgrad zu maximieren. Dies wird durch Regelbereiche 3 realisiert.

Regelbereich 3 :

Der Regelbereich 3 ist gekennzeichnet durch den Betrieb des Generators mit Leistungsfaktor $\cos\varphi =1$, d.h. Strangstrom und Strangspannung sind in Phase. Der Regelbereich 3 entspricht dem Betrieb des Generators mit passiver Diodengleichrichtung. Dieser Regelbereich wird bei Teillastbetrieb ab dem mittleren Drehzahlbereich eingestellt. Für den hier vorliegenden Fall einer konstanten Strangsspannung $U_S=U_{max}$ ergibt sich ein maximaler Wirkungsgrad des Generators. Um diesen Zustand einzustellen, wird der Erregerstrom so geregelt, daß sich $\varphi=0$ ergibt, das heißt die Blindleistung $P_B=0$ wird. Leistungen, die oberhalb der Grenzlinie $N_{23}$ liegen, können durch den Regelbereich 3 nicht erzeugt werden, da für diesen Fall ein Erregerstrom $I_E>I_{Emax}$ notwendig wird.

Der Betrag des Strangstroms ergibt für den Regelbereich 3 zu

$$I_S = \frac{2}{3} \cdot \frac{P_{Gen}}{U_{max}}$$

Der gesuchte Polradwinkel δ, die Längs- und Querströme $I_d$, $I_q$ und der Erregerstrom $I_E$ berechnen sich aus den Maschinengleichungen der Schenkelpolsynchronmaschine zu

$$\delta = \arctan\left(\frac{\omega \cdot L_q \cdot I_S}{(R_1 \cdot I_S - U_{max})}\right)$$

$I_d = I_S \cdot \sin(\delta)$, $I_q = I_S \cdot \cos(\delta)$

$$I_E = \frac{1}{\omega \cdot M_{de}} \cdot \left( (U_{max} - R_1 \cdot I_S) \cdot \cos\delta - \omega \cdot L_d \cdot I_S \cdot \sin\delta \right)$$

Damit ist die Maschinenführung für den Regelbereich 3 vollständig definiert.

Mit den im Regelbereich 1- 3 beschriebenen Regelstrukturen werden alle normalen Betriebszustände der Maschine abgedeckt.

Regelbereich 4:

Der im folgenden beschriebene Regelbereich 4 dient zum einen dazu, bei extremen Lastabwürfen eine hohe Regeldynamik sicherzustellen. Zum anderen stellt diese Regelfunktion eine zusätzliche Sicherheitsfunktion gegen Überspannungen dar.

Überschreitet $U_{Bist}$ eine einstellbare Überspannungsschwelle, so wird der normale Pulswechselrichterbetrieb verlassen und mit Hilfe der Schalter des Pulswechselrichters die 3-phasigen Ausgänge des Generators kurzgeschlossen. Dadurch sinkt die Überspannung sehr schnell ab. Gleichzeitig wird der Erregerstrom der Maschine, beispielsweise durch eine Schnellentregung, reduziert. Erreicht die Ausgangsspannung eine einstellbare Unterspannungsschwelle, die unterhalb dem Sollwert der Ausgangsspannung $U_{Bsoll}$ liegt, so wird die Maschine wieder entsprechend Regelbereich 1- 3 geführt.

Regelungstechnische Realisierung des Verfahrens:

Prinzipiell ist es möglich, die Grenzen zwischen den einzelnen Regelbereichen durch numerische Berechnung zu ermitteln und mit Hilfe der dargestellten Gleichungen den Erregerstrom sowie die Längs- und Querströme zu ermitteln. Dies führt jedoch zu einem sehr hohen numerischen Aufwand. Soll das Gesamtsystem jedoch im Kraftfahrzeug realisiert werden, so steht nur die begrenzte Rechenleistung der im Kfz aus Kostengründen einsetzbaren Controllern zur Verfügung.

Eine Möglichkeit diese Schwierigkeit zu umgehen, besteht beispielsweise in einem tabellenorientierten Verfahren. Der übergeordnete Regler besitzt die Eingänge $P_{soll}$. $n_G$, $U_b$ und die Ausgänge $I_E$ , Id und Iq , bzw. $I_s$ und ψ. Diese Abhängigkeit kann mit Hilfe einer mehrdimensionalen Tabelle abgebildet werden. Diese Tabelle enthält die offline berechneten Gleichungen des übergeordneten Reglers.(Regelbereich 1- 4)

**Patentansprüche**

1. Verfahren zur leistungs- und wirkungsgradoptimierten Regelung eines eine Erregerwicklung aufweisenden Generators mit zugeordneter Umrichterbrücke bei dem der durch die Erregerwicklung fließende Erregerstrom ($I_E$) so geregelt wird, dass eine vom Generator gelieferte Ausgangsspannung eine vorgebbare Höhe erreicht und dass zusätzlich die Strangströme des Generators geregelt werden,
wobei wenigstens drei Regelbereiche gebildet werden, in denen die Regelung des Erregerstromes und der Strangströme des Generators nach
unterschiedlichen Kriterien erfolgt, **dadurch gekennzeichnet, dass** in einem ersten Regelbereich der Erregerstrom
auf seinen maximal möglichen Wert gesetzt wird, wobei die Strangspannung kleiner als der durch den Pulswechselrichter einstellbone Maximalwert ist,
dass in einem zweiten Regelbereich der Erregerstrom ebenfalls auf seinen maximalen Wert gesetzt wird, jedoch
die Phasenlage des Strangstromes so gewählt wird, dass die Strangspannung den maximal möglichen Wert einnimmt und dass in einem dritten Regelbereich der Generator so betrieben wird, dass Strangstrom und Strangspannung in Phase sind und somit der Leistungsfaktor cos φ=1 wird und der Erregerstrom so geregelt wird, dass sich
ein Winkel von φ=0 ergibt.

2. Verfahren nach Anspruch 1, **dadurch gekennzeichnet, dass** der Generator eine Synchronmaschine ist.

3. Verfahren nach Anspruch 1, **dadurch gekennzeichnet, dass**
die Bildung der drei Regelbereiche in Abhängigkeit von der Ausgangsleistung ($P_{Gen}$) des Generators und/oder der
Drehzahl des Generators ($n_G$) gebildet werden.

4. Verfahren nach Anspruch 1 oder 2, **dadurch gekennzeichnet, dass** die Regelung so erfolgt, dass für jede Drehzahl
des Generators und jede gewünschte Generatorleistung der Erregerstrom und der oder die Strangströme nach
Betrag und Phase frei auswählbar sind.

5. Verfahren nach einem der vorhergehenden Ansprüche, **dadurch gekennzeichnet, dass** in einem vierten Regelbereich nach Überschreiten einer vorgebbaren Spannungsschwelle, die Generatorwicklungen durch entsprechende
Ansteuerung der Umrichterelemente kurzgeschlossen werden und der Erregerstrom reduziert wird.

6. Verfahren nach einem der vorhergehenden Ansprüche, **dadurch gekennzeichnet, daß** die für die Regelung benötigten Größen Sollwert des Erregerstroms $I_{Esoll}$, der Längs- und Querkomponenten des Strangstroms $I_{dsoll}$ und
$I_{qsoll}$ mit Hilfe mehrdimensionaler Tabellen ermittelt werden.


**Claims**

1. Method for controlling a generator, which has a field winding, so as to optimize power and efficiency, having an
associated converter bridge, in which method the field current ($I_E$) flowing through the field winding is controlled
such that an output voltage which is delivered by the generator reaches a predefinable level, and that, in addition,
the phase currents of the generator are controlled, with at least three control ranges being formed, in which the field
current and the phase currents of the generator are controlled in accordance with different criteria, **characterized
in that**, in a first control range, the field current is set to its maximum possible value, with the phase voltage being
lower than the maximum value that can be set by the pulse-controlled inverter, **in that**, in a second control range,
the field current is likewise set to its maximum value but the phase angle of the phase current is selected such that
the phase voltage assumes the maximum possible value, and **in that**, in a third control range, the generator is
operated such that the phase current and phase voltage are in phase and therefore the power factor becomes cos
φ=1 and the field current is controlled such that an angle of φ=0 is produced.

2. Method according to Claim 1, **characterized in that** the generator is a synchronous machine.

3. Method according to Claim 1, **characterized in that** the three control ranges are formed as a function of the output
power ($P_{Gen}$) of the generator and/or the rotation speed of the generator ($n_G$).

4. Method according to Claim 1 or 2, **characterized in that** control is performed such that the field current and the
magnitude and phase of the phase current or phase currents can be freely selected for each rotation speed of the
generator and each desired generator power.

5. Method according to one of the preceding claims, **characterized in that**, in a fourth control range, the generator
windings are shorted by corresponding actuation of the converter elements, and the field current is reduced, after
a predefinable voltage threshold is exceeded.

**6.** Method according to one of the preceding claims, **characterized in that** the variables which are required for control, that is setpoint value of the field current $I_{Eset}$ and of the in-phase and quadrature components of the phase current $I_{dset}$ and $I_{qset}$, are determined with the aid of multidimensional tables.

**Revendications**

**1.** Procédé de régulation à optimisation de la puissance et du rendement d'un générateur qui présente un bobinage d'excitateur et auquel des ponts convertisseurs sont associés, dans lequel le courant d'excitateur ($I_E$) qui traverse le bobinage d'excitateur est régulé de telle sorte que la tension de sortie délivrée par le générateur atteigne un niveau prédéterminé et qu'en supplément les courants de barres du générateur soient régulés, avec formation d'au moins trois plages de régulation dans lesquelles la régulation du courant d'excitateur et des courants de barres du générateur s'effectue suivant des critères différents,
**caractérisé en ce que**
dans une première plage de régulation, le courant d'excitateur est placé à sa valeur maximale possible, la tension de barre étant inférieure à la valeur maximale qui peut être établie par l'onduleur pulsé,
**en ce que** dans une deuxième plage de régulation, le courant d'excitateur est également fixé à sa valeur maximale mais le déphasage du courant de barre est sélectionné de telle sorte que la tension de barre prenne la valeur maximale possible et
**en ce que** dans une troisième plage de régulation, le générateur est utilisé de telle sorte que le courant de barre et la tension de barre soient en phase, le facteur de puissance étant ainsi cos $\varphi = 1$, et que le courant d'excitateur soit régulé de manière à obtenir un angle $\varphi = 0$.

**2.** Procédé selon la revendication 1, **caractérisé en ce que** le générateur est une machine synchrone.

**3.** Procédé selon la revendication 1, **caractérisé en ce que** les trois plages de régulation sont formées en fonction de la puissance de sortie ($P_{Gen}$) du générateur et/ou de la vitesse de rotation ($n_G$) du générateur.

**4.** Procédé selon les revendications 1 ou 2, **caractérisé en ce que** la régulation s'effectue de telle sorte que le courant d'excitateur et le ou les courants de barres puissent être sélectionnés librement en termes de valeur et de phase pour chaque vitesse de rotation du générateur et chaque puissance souhaitée du générateur.

**5.** Procédé selon l'une des revendications précédentes, **caractérisé en ce que** dans une quatrième plage de régulation, après le dépassement d'un seuil de tension prédéterminé, les bobinages du générateur sont mis en court-circuit par commande appropriée des éléments convertisseurs et le courant d'excitateur est réduit.

**6.** Procédé selon l'une des revendications précédentes, **caractérisé en ce que** les grandeurs nécessaires pour la régulation, à savoir la valeur de consigne du courant d'excitateur $I_{Esoll}$, la composante longitudinale et la composante transversale du courant de barre $I_{dsoll}$ et $I_{qsollt}$ sont déterminées à l'aide de tableaux multidimensionnels.

**Fig.1**

**Fig.2**

Fig.3

Fig.4

Pulswechselrichter mit Zwischenkreiskondensator    Last mit Batterie

## Fig.5

## Fig.6

**EP 1 051 800 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE P19733221
- DE P19845569
- DE P19733212
- US PS5648705 A
- EP 0762596 A1
- US PS5663631 A
- EP 0717490 A1